# EUROPÄISCHE PATENTSCHRIFT

(11) **EP 2 949 585 B1**
(45) Veröffentlichungstag und Bekanntmachung des Hinweises auf die Patenterteilung: **07.12.2016**
(21) Anmeldenummer: 15169823.0
(22) Anmeldetag: 29.05.2015
(51) Int. Cl.: B65B 55/04, B65B 55/10, B65B 3/02, B67C 7/00

(54) **VERFAHREN UND VORRICHTUNG ZUM BEFÜLLEN VON FLASCHEN**
METHOD AND DEVICE FOR FILLING BOTTLES
PROCEDE ET DISPOSITIF DE REMPLISSAGE DE BOUTEILLES

(30) Priorität: 30.05.2014 DE 102014210306; 10.06.2014 DE 102014211059
(43) Veröffentlichungstag der Anmeldung: 02.12.2015
(73) Patentinhaber: Induflex Robert Morgan e.K., 27337 Blender (DE)
(72) Erfinder: MORGAN, Robert, 27337 Blender (DE)
(74) Vertreter: Eisenführ Speiser

(56) Entgegenhaltungen:
- EP-A1- 2 394 950
- EP-B1- 2 185 466
- DE-A1- 19 547 425

## Beschreibung

Die vorliegende Erfindung betrifft ein Verfahren und eine Vorrichtung zum Abfüllen von Flaschen, insbesondere PET-Flaschen, sowie eine Verwendung einer Stange, insbesondere eine Reckstange, zum Aufblasen und Abfüllen von Flaschen.

Gemäß dem Stand der Technik werden Flaschenrohlinge, die auch Preforms genannt werden, in einen Abfüllbetrieb geliefert und dort zur fertigen Flaschenform aufgeblasen. Dieses Aufblasen wird auch als Ausblasen bezeichnet. Nach dem Aufblasen oder Ausblasen werden die Flaschen gereinigt, sterilisiert und/oder desinfiziert und befüllt. Das Aufblasen der Flaschen am Abfüllort ist vorteilhaft, weil dadurch Transportkosten und Lagerfläche eingespart werden kann.

DE 195 47 425 A1 zeigt beispielsweise einen Flaschenrohling, der zu einer Flasche aufgeblasen wird.

Alternativ sind auch Abfüllunternehmen bekannt, die sich die aufgeblasenen Flaschen direkt anliefern lassen. Grund hierfür ist, dass derartige Unternehmen z.B. in ihren Betriebshallen - in denen ursprünglich Glasflaschen abgefüllt wurden - nach der Umstellung von Glas- auf die heute eher üblichen PET-Flaschen keine Kapazitäten für Blas- oder Aufblasmaschinen zum Aufblasen der Rohlinge zur Verfügung haben. Daher ist ein Aufblasen der Rohlinge zu Flaschen innerhalb der ursprünglichen Betriebshallen derartiger Betriebe bislang - zumindest ohne Erweiterung der Betriebshallen - nicht möglich.

Bei allen Abfüllunternehmen gleich ist, dass der aufgeblasenen Flaschenrohling, also die fertige Flasche vor dem Abfüllen gereinigt, sterilisiert und/oder desinfiziert werden muss, damit die in eine Flasche abgefüllte Flüssigkeit z.B. für bestimmt Zeit bei geschlossener Flasche haltbar bleibt.

Zum Reinigen, insbesondere Desinfizieren, Sterilisieren und/oder Entkeimen wird häufig H2O2 in die Flasche eingefüllt oder in die Flasche eingeblasen.

Aufgabe der vorliegenden Erfindung ist es daher, Kosten bei der Abfüllung von Flaschen zu sparen und insbesondere die bei der Sterilisierung eingesetzte Menge an Medien zu minimieren, wobei gleichzeitig die Qualität der Reinigung beibehalten werden muss.

Die Aufgabe wird mit einem Verfahren zum Befüllen von Flaschen, insbesondere PET-Flaschen, nach Anspruch 1, sowie einer Vorrichtung zum Befüllen von Flaschen nach Anspruch 5 und durch Verwendung einer Stange, insbesondere einer Reckstange, nach Anspruch 10 gelöst. Vorteilhafte Weiterbildungen sind in den Unteransprüchen beschrieben.

Das erfindungsgemäße Verfahren zum Befüllen von Flaschen, insbesondere PET-Flaschen, umfasst zunächst einen Schritt, bei dem am Flaschenrohling, der auch Preform genannt wird, eine Füllkappe, insbesondere durch Verschrauben der Füllkappe mit einem Gewinde am Kopf des Flaschenrohlings, an einem Flaschenrohling angeordnet wird. Ferner wird auf der Füllkappe ein Füllkopf angeordnet. Der Zugang zum Inneren des Flaschenrohlings ist demnach nur noch durch den Füllkopf und die Füllkappe möglich. Ein Beispiel eines derartigen Füllkopfes sowie dessen Anordnung am Gewinde ist z.B. im europäischen Patent EP 2185466B1 offenbart.

Ferner wird der Flaschenrohling durch die Füllkappe und den Füllkopf gereinigt, insbesondere desinfiziert, sterilisiert und/oder entkeimt.

Nach dem Reinigen, Desinfizieren und/oder Sterilisieren des Flaschenrohlings wird der Flaschenrohling in einer Ausblasform positioniert und mit Druckluft zu einer Flasche aufgeblasen. Das Aufblasen erfolgt gemäß einem weiteren Ausführungsbeispiel mit einer Stange, die auch Reckstange genannt wird. Das Aufblasen wird auch häufig als Ausblasen bezeichnet. Jedenfalls erfolgt das Aufblasen ebenfalls durch den Füllkopf und die Füllkappe.

Das Ergebnis ist eine Flasche, insbesondere eine PET-Flasche, die eine endgültige Form aufweist, wie sie aus dem Handel bekannt ist. Die Flasche wird nach dem Aufblasen direkt mit dem gewünschten Abfüllgut, z.B. Mineralwasser, Schorle, Saft, Milch, limonadenhaltige Getränke (z.B. Cola) oder dergleichen sowie Medikamente, insbesondere in flüssiger Form, befüllt. Das Befüllen erfolgt über den Füllkopf und die Füllkappe. Nach dem Befüllen wird die Flasche, insbesondere durch Verschweißen der Füllkappe im Bereich des ersten Endes verschlossen und der Füllkopf entfernt.

Gegenüber herkömmlichen Verfahren muss somit lediglich der Flaschenrohling - und nicht die ganze Flasche - gereinigt, also insbesondere desinfiziert, sterilisiert und/oder entkeimt werden. Der Flaschenrohling weist gegenüber der fertig geformten PET-Flasche ein wesentlich geringeres Volumen auf und es muss daher eine wesentlich geringere Menge an Medien für die Reinigung aufgewendet werden. Daher ist die Reinigung und somit insgesamt das Abfüllen wesentlich kostengünstiger zu realisieren. Dieses Reinigen des Flaschenrohlings anstatt der Flasche wird jedoch erst dadurch ermöglicht, dass nur der Füllkopf und die Füllkappe bereits vor dem Aufblasen des Flaschenrohlings einen Zugang zum Innenraum des Flaschenrohlings erlauben und somit Verunreinigungen der Flasche zwischen dem Aufblasen und Befüllen nicht mehr möglich sind. Eine Antiseptische Abfüllung ist ferner möglich.

Demnach kann der Innenraum der Flasche bzw. das Volumen der Flasche während des Reinigens, insbesondere des Desinfizierens und/oder des Sterilisierens sowie während des Aufblasens und des Befüllens gegenüber der Umgebung abgeschlossen bleiben. Das heißt, das Volumen wird vor dem Reinigen des Flaschenrohlings gegenüber der Umgebung abgesperrt und muss erst nach dem Befüllen und Verschließen der Flasche geöffnet werden. Dies ist möglich, da das Aufblasen des Flaschenrohlings sowie das Befüllen der Flasche in derselben Vorrichtung erfolgt.

Gemäß einer ersten Ausführungsform erfolgen das Aufblasen und/oder das Befüllen mit einer Stange, insbesondere einer Reckstange. Gemäß einer weiteren Ausführungsform wird zumindest ein Teil der Stange bereits vor dem Reinigen, Desinfizieren und/oder Sterilisieren in das Volumen bzw. den Innenraum des Flaschenrohlings eingeführt. Dadurch ergibt sich der Vorteil, dass dieser bereits eingeführte Teil der Reckstange direkt beim Reinigungs-, Desinfizier- oder Sterilisierschritt mit gereinigt, desinfiziert und/oder sterilisiert wird. Gemäß einer weiteren Ausführungsform ist es auch vorstellbar, dass das Reinigungsmedium direkt mittels der Stange in das Volumen bzw. den Innenraum des Flaschenrohlings eingebracht wird, mit der auch die jeweils gereinigte Flasche später aufgeblasen und befüllt wird.

Gemäß einer weiteren Ausführungsform des Verfahrens wird die Flasche unmittelbar nach dem Entfernen der Stange verschlossen. Die somit im Wesentlichen keimfreie Flasche wird dadurch gegenüber der Umgebung im Wesentlichen keimfrei gehalten.

Gemäß der erfindungsgemäßen Vorrichtung zum Befüllen von Flaschen, insbesondere von PET-Flaschen, umfasst diese zumindest eine Ausblasform, die zumindest zum Aufblasen von Flaschenrohlingen ausgebildet ist. Ferner ist die Vorrichtung dazu eingerichtet, am Flaschenrohling vor dem Aufblasen eine Füllkappe und an der Füllkappe einen Füllkopf anzuordnen und den Flaschenrohling durch den Füllkopf und die Füllkappe zu reinigen.

Demnach erfolgen das Befüllen (mit Abfüllgut, z.B. Mineralwasser, Schorle, Fruchtsaft Milch, Bier, limonadenhaltige Getränke (z.B. Cola), etc. sowie Medikamente, insbesondere in flüssiger Form) und das Aufblasen in ein und derselben Maschine, sodass der Transport von einer Aufblasmaschine zu einer Abfüllmaschine entfällt. Somit kann die Reinigung, insbesondere die Desinfektion und/oder Sterilisierung, bereits des Flaschenrohlings anstatt der fertigen Flasche erfolgen, sodass das Reinigen der Flasche selbst unnötig wird. Ferner ist nur noch eine einzige Vorrichtung zum Befüllen und Aufblasen nötig, sodass auch ein Aufblasen in Abfüllunternehmen erfolgen kann, deren Produktionshallen bislang keine Kapazitäten für eine separate Aufblasmaschine neben der Abfüllmaschine bereitstellen konnten. Die ursprünglich installierte Abfüllmaschine derartiger Unternehmen kann daher vorteilhafterweise einfach durch eine Abfüllmaschine, die gleichzeitig zum Aufblasen geeignet ist, ersetzt werden.

Gemäß einer Ausführungsform der Vorrichtung weist diese einen Förderer, insbesondere einen Kreisförderer, zur Aufnahme und Förderung von Flaschenrohlingen und Flaschen auf. Das heißt, es ist nur ein einziger Förderer nötig, der an einer ersten Stelle die Flaschenrohlinge aufnimmt und an einer anderen Stelle die befüllten Flaschen abgibt.

Gemäß einer weiteren Ausführungsform der Vorrichtung weist der Kreisförderer mehrere Bereiche auf. Einer der Bereiche ist ein Reinigungsbereich oder Sterilisationsbereich, in dem der bzw. die Flaschenrohlinge sterilisiert bzw. gereinigt werden. Im darauf folgenden Ausblasbereich oder Aufblasbereich werden die Flaschenrohlinge zu einer Flasche auf- bzw. ausgeblasen. Die ausgeblasene Flasche wird dann in einem darauf folgenden Füllbereich befüllt. Somit ist ein Abfüllen der Flasche ohne erneute Reinigung nach dem Aufblasen mit einer einzigen Vorrichtung möglich.

Gemäß einer weiteren Ausführungsform weist der Förderer zusätzlich einen Aufnahmebereich zum Aufnehmen von Flaschenrohlingen vor dem Reinigungsbereich auf. In diesem Aufnahmebereich werden auf dem Flaschenrohling ferner eine Füllkappe und ein Füllkopf an der Füllkappe angeordnet. Zudem weist der Förderer nach dem Füllbereich einen Verschlussbereich zum Verschließen der gefüllten Flaschen und einen Abgabebereich zum Abgeben der gefüllten, geschlossenen Flaschen auf. Demnach ist der Abfüller geeignet, direkt - insbesondere für das Aufblasen vorgeheizte - Flaschenrohlinge aufzunehmen, mit einer Füllkappe und einem Füllkopf zu versehen, zu reinigen, aufzublasen, zu befüllen und zu verschließen. Im Abgabebereich werden dann die befüllten Flaschen direkt zur Lagerung oder für den Transport zum Verkaufsort ausgegeben.

Gemäß einer weiteren Ausführungsform der Vorrichtung weist die Stange mindestens einen ersten Kanal mit ersten Öffnungen und mindestens einen zweiten Kanal mit zweiten Öffnungen auf. Demnach ist ein erster Kanal mit seinen Öffnungen dazu geeignet, zum Beispiel Druckluft zum Aus-bzw. Aufblasen des Flaschenrohlings vom Außenbereich in den Innenraum des Flaschenrohlings zu führen. Es versteht sich, dass diese Druckluft keimfrei oder im Wesentlichen keimfrei ist, damit der zuvor gereinigte Flaschenrohling nicht wieder verschmutzt wird. Im zweiten Kanal mit den zweiten Öffnungen ist dann zum Beispiel eine Flüssigkeit bzw. das Medium, das in die Flasche eingefüllt werden soll, in den Innenraum der Flasche einfüllbar. Durch getrennte Kanäle mit Öffnungen ist demnach eine kontrollierte Abgabe des Ausblasmediums und des Mediums zum Befüllen möglich, ohne dass sich diese durch Rückstände vermischen.

Ferner umfasst die Erfindung die Verwendung einer Stange, insbesondere einer Reckstange, zum Aufblasen eines Flaschenrohlings, insbesondere eines PET-Flaschenrohlings, zu einer Flasche, insbesondere einer PET-Flasche, und zum Befüllen der Flasche. Ferner ermöglicht die Verwendung derselben Stange zum Aufblasen und zum Befüllen der Flasche, die Flasche während des Aufblasens und des Befüllens nachfolgend auf die Reinigung geschlossen zu halten, sodass eine erneute Sterilisierung nach dem Ausblasen und vor dem Abfüllen unnötig ist.

Weitere vorteilhafte Ausführungsbeispiele der Erfindung werden nachstehend unter Bezugnahme auf die Zeichnungen näher erläutert.
- Fig. 1: zeigt eine schematische Darstellung eines Flaschenrohlings mit einer Stange gemäß einem ersten Ausführungsbeispiel der Vorrichtung,
- Fig. 2: eine schematische Darstellung des aufgeblasenen bzw. ausgeblasenen Flaschenrohlings zu einer Flasche,
- Fig. 3: ein Ausführungsbeispiel der erfindungsgemäßen Vorrichtung mit weiteren Komponenten zum Befüllen.
- Fig. 4: ein Ausführungsbeispiel einer Flasche mit daran angeordnetem Füllkopf und Füllkappe,
- Fig. 5: ein Ausführungsbeispiel eines Reinigungsschrittes,
- Fig. 6: ein Ausführungsbeispiel eines Befüllschritts,
- Fig. 7: ein Ausführungsbeispiel eines Verschlussschritts und
- Fig. 8: das Entfernen eines überstehenden Teils der Füllkappe.

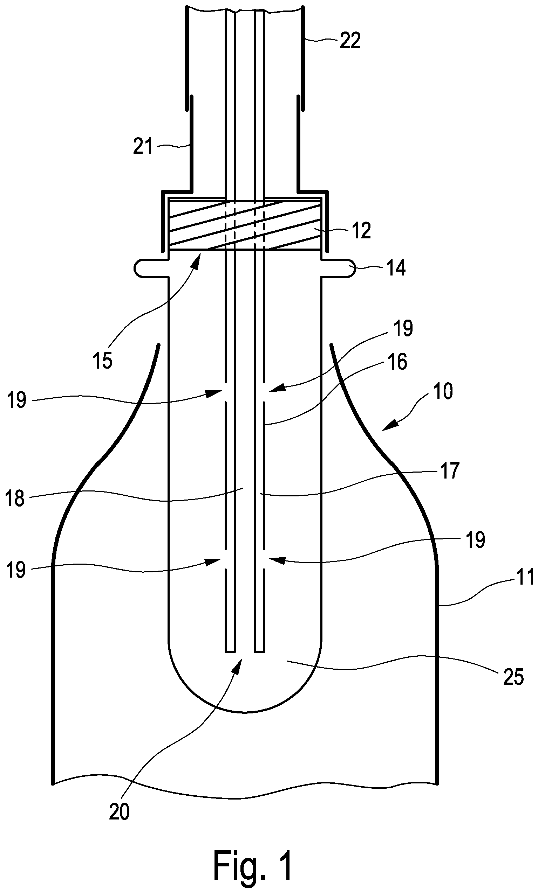

Fig. 1 zeigt einen eine schematische Darstellung eines Flaschenrohlings 10, der auch Preform genannt wird. Der Flaschenrohling 10 ist in eine Aufblasform 11 eingeführt. Im oberen Bereich, also am Flaschenkopf, weist der Flaschenrohling ein umlaufendes Gewinde 12 sowie einen umlaufenden Kragen 14 auf. Der Flaschenrohling 10 ist ein Flaschenrohling 10 für eine PET-Flasche. Im Bereich des Gewindes 12 weist der Flaschenrohling 10 eine Öffnung 15 auf.

Durch die Öffnung 15 wird eine Stange 16, hier eine Reckstange, in den Flaschenrohling 10 eingeführt. Die Reckstange weist einen ersten Kanal 17 und einen zweiten Kanal 18 auf. Der erste Kanal 17 ist mit ersten Öffnungen 19 verbunden und der zweite Kanal 18 ist mit einer zweiten Öffnung 20 verbunden.

Ferner ist eine Abfüllkappe 21 und ein Abfüllkopf 22 oder Füllkopf 22 dargestellt. Die Abfüllkappe 21 wird gemäß diesem Ausführungsbeispiel mit ihrem ersten Ende am Abfüllkopf 22 und mit ihrem zweiten Ende auf dem Flaschenrohling 10, z.B. durch Verschrauben auf dem Gewinde 12, angeordnet. Somit ist der Innenraum 25 des Flaschenrohlings 10 gegenüber der Umgebung, insbesondere im Wesentlichen Luftdicht, abgeschlossen und nur noch über die Abfüllkappe 21 und/oder die Reckstange 16 bzw. deren Öffnungen und Kanäle zugänglich.

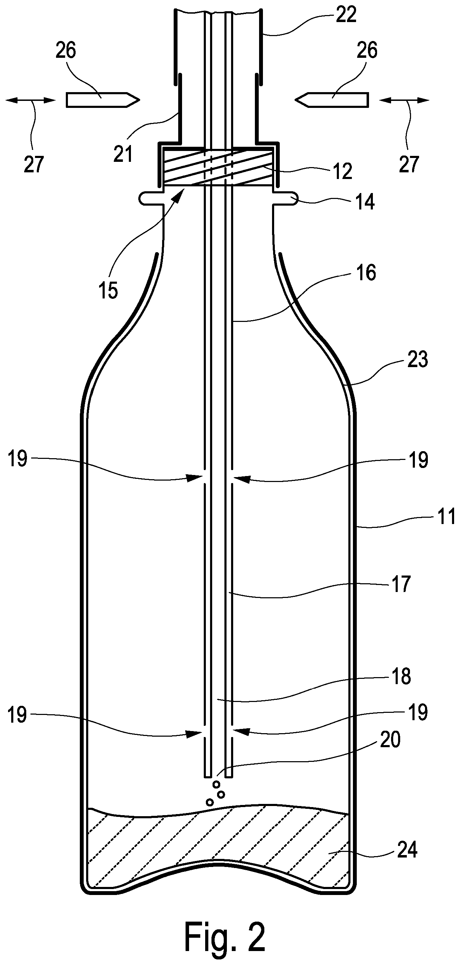

Fig. 2 zeigt gegenüber Fig. 1 den nun zur Flasche 23 aufgeblasenen Flaschenrohling 10. Die Flaschenform der Flasche 23 ist an die Aufblasform 11 angepasst. Der Flaschenrohling 10 wurde über die ersten Kanäle 17 und die Öffnungen 19 mit Druckluft aufgeblasen. Die Stange 16 befindet sich weiterhin im Innenraum der Flasche 23. Die Abfüllkappe 21 ist nach dem Ausblasen und vor dem Einfüllen nicht von der Öffnung 15 oberhalb des Gewindes 12 entfernt worden. Durch die Öffnung 20 wird über den zweiten Kanal 18 eine Flüssigkeit 24 in die Flasche 23 durch die Stange 16 eingefüllt.

Ferner sind schematisch zwei Schweißköpfe 26 einer Schweißvorrichtung, insbesondere einer Ultraschallschweißvorrichtung, dargestellt. Die Schweißköpfe 26 sind in Pfeilrichtung 27 beweglich angeordnet und werden zum Verschließen der Füllkappe 21, insbesondere zum Verschweißen der Füllkappe 21, gegen den Bereich des ersten Endes der Füllkappe 21 gedrückt, sodass die Außenwände der Füllkappe 21 zusammengedrückt werden, bis sich diese berühren, um dann insbesondere verschweißt zu werden. Nachdem die Flasche 23 somit verschlossen ist, wird der Füllkopf 22 entfernt, wogegen die Füllkappe 22 auf der Flasche 23 als Verschluss verbleibt.

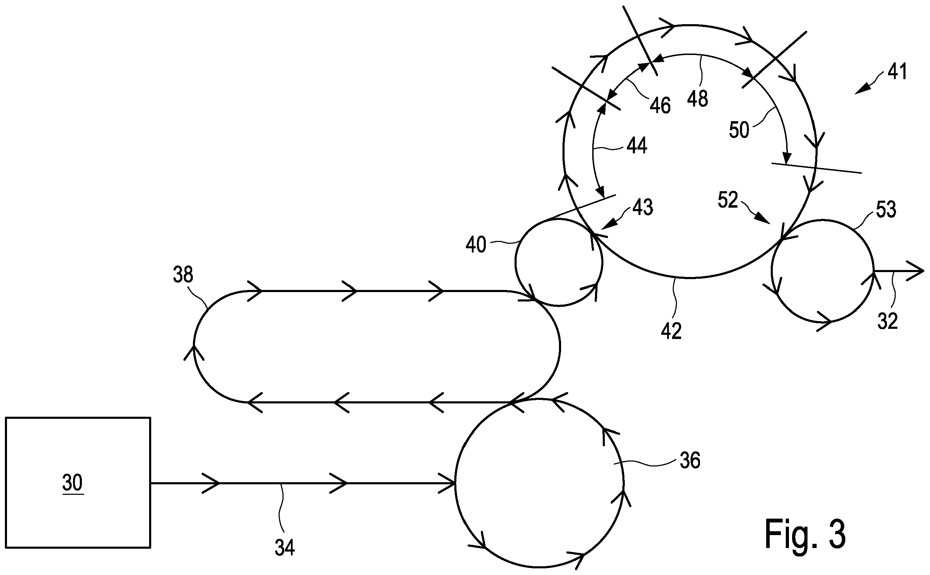

In Fig. 3 wird ein schematischer Ablauf eines Ausführungsbeispiels des Verfahrens mit seinen Schritten anhand einer schematischen Darstellung eines Ausführungsbeispiels der Vorrichtung dargestellt.

Zunächst ist ein Behälter 30, in dem die Flaschenrohlinge 10 bevorratet werden und der auch Preformbunker genannt wird, dargestellt. Vom Behälter 30 durchlaufen die Flaschenrohlinge 10 das Verfahren bzw. die Vorrichtung und weitere Komponenten, bis eine abgefüllte Flasche 23 am Ende 32 ausgegeben wird. Zunächst werden die Flaschenrohlinge 10 nach Verlassen des Behälters 30 in einem Rollensortierer 34, insbesondere mit ihrer Öffnung 15 nach oben, ausgerichtet. Über eine erste Umlenkstrecke 36 werden die Flaschenrohlinge 10 einem Heiztunnel 38 zugeführt. Im Heiztunnel 38 werden die Flaschenrohlinge vorbereitend auf ein späteres Aus- oder Aufblasen vorgeheizt.

Über eine zweite Umlenkstrecke werden die vorgeheizten Flaschenrohlinge 10 einem Ausführungsbeispiel der erfindungsgemäßen Vorrichtung 41 zugeführt. Die Vorrichtung 41 umfasst einen Förderer 42, hier einen Kreisförderer, mit einem Aufnahmebereich 43 zum Aufnehmen der Flaschenrohlinge 10 und zum Anordnen einer Füllkappe 21 und eines Füllkopfes 22 am Flaschenrohling, einem Reinigungs- oder Sterilisationsbereich 44 zum Reinigen und/oder Sterilisieren der Flaschenrohlinge 10, einem Aufblasbereich 46 zum Aufblasen der Flaschenrohlinge 10 zu einer Flasche 23, einem Füllbereich 48 zum Auffüllen der Flasche 23 und einem Verschlussbereich 50 zum Verschließen der aufgefüllten Flasche 23.

In einem darauf folgenden Abgabebereich 52 werden die gefüllten Flaschen dann an eine dritte Umlenkstrecke 53 übergeben, um die gefüllten Flaschen zum Beispiel in ein nicht dargestelltes Lager zu führen.

Die Vorrichtung 41 ermöglicht das Auf- bzw. Ausblasen der Flaschenrohlinge 10 sowie das Abfüllen der Flaschen 23 und ist somit platzsparend. Gemäß diesem Ausführungsbeispiel ist mit der Vorrichtung ebenfalls ein Reinigen der Flaschenrohlinge 10 anstatt der Flaschen möglich, wobei die Flaschenrohlinge 10 gegenüber der Flasche 23 ein geringeres Volumen aufweisen und dadurch das Reinigungsmedium, insbesondere Ozon, eingespart wird.

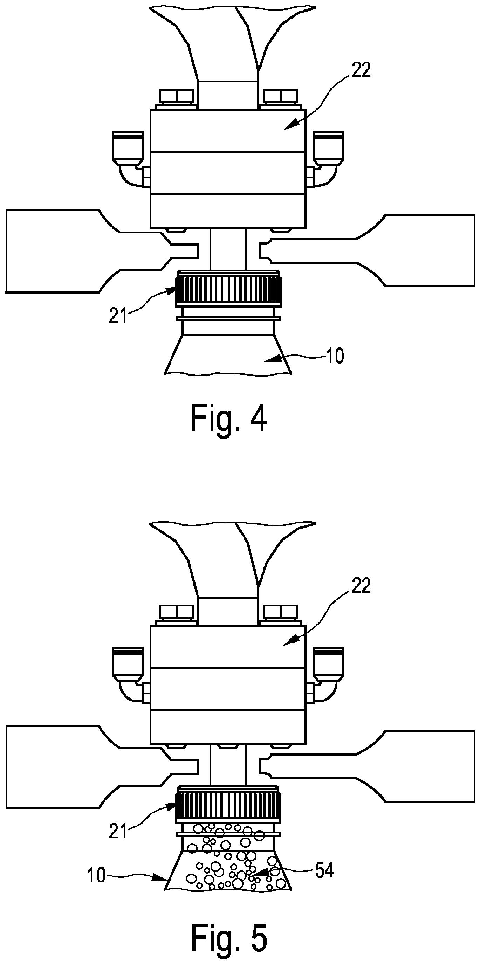

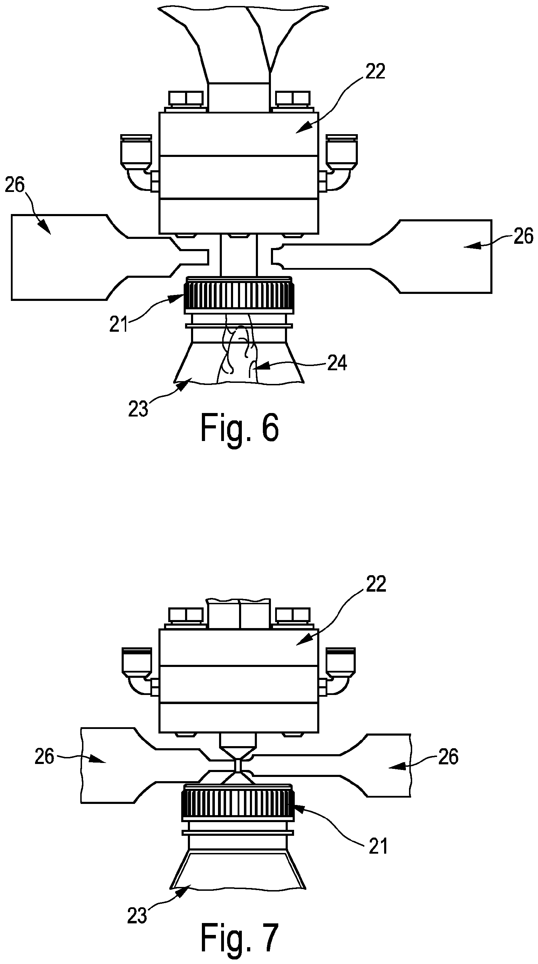

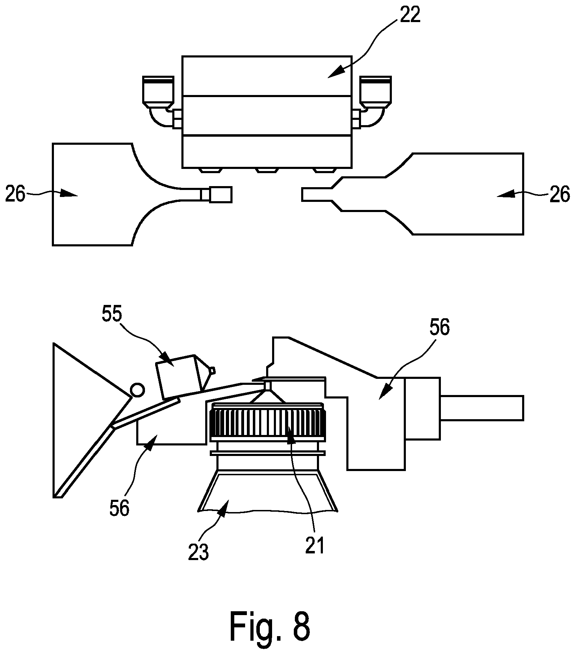

Ferner zeigt Fig. 4 den Flaschenrohling 10 mit daran angeordneter Abfüllkappe 21 und dem an der Abfüllkappe 21 angeordneten Abfüllkopf 22. In Fig. 5 wird nun Ozon 54 in das Flascheninnere geblasen. Der Aufblasschritt ist nicht dargestellt. In Fig. 6 wird die aufgeblasene Flasche 23 mit einer Flüssigkeit 24 befüllt und in Fig. 7 wird die befüllte Flasche 23 mit zwei Ultraschallschweißköpfen 26 verschlossen. Dazu wird die Abfüllkappe 21 im mittleren Bereich zusammengedrückt und verschweißt. Fig. 8 zeigt das Abschneiden eines nicht mehr benötigten Teils 55 der Abfüllkappe 21 mit einer Trenneinrichtung 56.

## Patentansprüche

1. Verfahren zum Befüllen von Flaschen (23), insbesondere PET-Flaschen, umfassend die Schritte:
- Anbringen einer Füllkappe (21) an einem Flaschenrohling (10) und Anordnen eines Füllkopfs (22) an der Füllkappe (21),
- Reinigen, insbesondere Desinfizieren, Sterilisieren und/oder Entkeimen, des Flaschenrohlings (10), insbesondere einer Preform, durch die Füllkappe (21) und den Füllkopf (22),
- Aufblasen des Flaschenrohlings (10) zu einer Flasche (23) durch die Füllkappe (21) und den Füllkopf (22),
- Befüllen der Flasche (23) durch die Füllkappe (21) und den Füllkopf (22), insbesondere mit einer Stange (16), z.B. einer Reckstange,
- Verschließen der Füllkappe (21) und Entfernen des Füllkopfes (22).

2. Verfahren nach Anspruch 1, wobei das Aufblasen des Flaschenrohlings (10) zu einer Flasche (23) und das Befüllen der Flasche mit derselben Stange (16), insbesondere einer Reckstange, erfolgen und/oder das Aufblasen des Flaschenrohlings (10) zu einer Flasche (23) und das Befüllen der Flasche jeweils in derselben Ausblasform (11) erfolgen.

3. Verfahren nach Anspruch 2, wobei zumindest ein Teil der Stange (16) bereits zum Reinigen des Flaschenrohlings (10) in den Flaschenrohling (10) eingeführt wird.

4. Verfahren nach einem der vorherigen Ansprüche, wobei die Flasche (23) unmittelbar nach dem Entfernen der Stange (16) verschlossen wird.

5. Vorrichtung zum Befüllen von Flaschen (23), insbesondere PET-Flaschen, umfassend zumindest eine Ausblasform (11) zum Aufblasen von Flaschenrohlingen (10), insbesondere von Preforms durch eine Füllkappe (21) und einen Füllkopf (22),
**dadurch gekennzeichnet, dass**
die Vorrichtung eingerichtet ist, am Flaschenrohling (10) vor dem Aufblasen die Füllkappe (21) und an der Füllkappe den Füllkopf (22) anzuordnen und den Flaschenrohling (10) durch den Füllkopf (22) und die Füllkappe (21) zu reinigen.

6. Vorrichtung nach Anspruch 5, wobei die Vorrichtung einen Förderer (42), insbesondere einen Kreisförderer, zur Aufnahme und Förderung von Flaschenrohlingen (10) und Flaschen (23) aufweist.

7. Vorrichtung nach Anspruch 5 oder 6, wobei die Vorrichtung, insbesondere der Förderer (42), folgende Bereiche umfasst:
- einen Aufnahmebereich (42) zum Aufnehmen der Flaschenrohlinge (10) und zum Anbringen der Füllkappe (21) und des Füllkopfes (22),
- einen Reinigungsbereich (44) zum Reinigen, insbesondere zum Desinfizieren, Sterilisieren und/oder Entkeimen, der Flaschenrohlinge (10),
- einen Aufblasbereich (46) zum Aufblasen der Flaschenrohlinge (10) zu einer Flasche (23) und
- einen Füllbereich (48) zum Abfüllen der Flasche (23).
- einen Verschlussbereich (50) zum Verschließen der gefüllten Flaschen (23, durch Verschweißen der Füllkappe (21).

8. Vorrichtung nach Anspruch 6 oder 7, wobei der Förderer (42) einen Abgabebereich (52) zum Abgeben der befüllten geschlossenen Flaschen (23) aufweist.

9. Vorrichtung nach einem der Ansprüche 5 bis 8, wobei die Stange (16) mindestens einen ersten Kanal (17) mit mindestens einer ersten Öffnung (19) und mindestens einen zweiten Kanal (18) mit mindestens einer zweiten Öffnungen (20) aufweist.

## Claims

1. A method for filling bottles (23), in particular PET bottles, comprising the steps:
- attaching a filling cap (21) to a bottle blank (10) and arranging a filling head (22) on the filling cap (21),
- cleaning, in particular disinfecting, sterilising and/or removing germs from, the bottle blank (10), in particular a preform, through the filling cap (21) and the filling head (22),
- inflating the bottle blank (10) to form a bottle (23) through the filling cap (21) and the filling head (22),
- filling the bottle (23) through the filling cap (21) and the filling head (22), in particular with a rod (16), e.g. a stretching rod,
- sealing the filling cap (21) and removing the filling head (22).

2. A method according to Claim 1, wherein the inflating of the bottle blank (10) to form a bottle (23) and the filling of the bottle take place with the same rod (16), in particular a stretching rod, and/or the inflating of the bottle blank (10) to form a bottle (23) and the filling of the bottle take place in each case in the same blow mould (11).

3. A method according to Claim 2, wherein at least part of the rod (16) is already introduced into the bottle blank (10) in order to clean the bottle blank (10).

4. A method according to one of the preceding claims, wherein the bottle (23) is sealed immediately once the rod (16) has been removed.

5. A device for filling bottles (23), in particular PET bottles, comprising at least one blow mould (11) for inflating bottle blanks (10), in particular preforms, through a filling cap (21) and a filling head (22),
**characterised in that**
the device is set up to arrange the filling cap (21) on the bottle blank (10) before the inflation and to arrange the filling head (22) on the filling cap and to clean the bottle blank (10) through the filling head (22) and the filling cap (21).

6. A device according to Claim 5, wherein the device has a conveyor (42), in particular a circular conveyor, for receiving and conveying bottle blanks (10) and bottles (23).

7. A device according to Claim 5 or 6, wherein the device, in particular the conveyor (42), comprises the following regions:
- a receiving region (42) for receiving the bottle blanks (10) and for attaching the filling cap (21) and the filling head (22),
- a cleaning region (44) for cleaning, in particular for disinfecting, sterilising and/or removing germs from, the bottle blanks (10),
- an inflation region (46) for inflating the bottle blanks (10) to form a bottle (23), and
- a filling region (48) for filling the bottle (23),
- a sealing region (50) for sealing the filled bottles (23) by welding the filling cap (21).

8. A device according to Claim 6 or 7, wherein the conveyor (42) has a discharge region (52) for discharging the filled closed bottles (23).

9. A device according to one of Claims 5 to 8, wherein the rod (16) has at least one first duct (17) with at least a first opening (19) and at least a second duct (18) with at least a second opening (20).

## Revendications

1. Procédé servant à remplir des bouteilles (23), en particulier des bouteilles en PET, comprenant les étapes suivantes consistant à :
- installer un capuchon de remplissage (21) au niveau d'une ébauche de bouteille (10) et disposer une tête de remplissage (22) au niveau du capuchon de remplissage (21),
- nettoyer, en particulier désinfecter, stériliser et/ou aseptiser, l'ébauche de bouteille (10), en particulier une préforme, par le capuchon de remplissage (21) et la tête de remplissage (22),
- gonfler l'ébauche de bouteille (10) pour former une bouteille (23) par le capuchon de remplissage (21) et la tête de remplissage (22),
- remplir la bouteille (23) par le capuchon de remplissage (21) et la tête de remplissage (22), en particulier avec une tige (16), par exemple une tige d'étirage,
- fermer le capuchon de remplissage (21) et retirer la tête de remplissage (22).

2. Procédé selon la revendication 1, dans lequel le gonflage de l'ébauche de bouteille (10) pour former une bouteille (23) et le remplissage de la bouteille avec la même tige (16), en particulier une tige d'étirage, sont effectués, et/ou le gonflage de l'ébauche de bouteille (10) pour former une bouteille (23) et le remplissage de la bouteille sont effectués respectivement dans le même moule de gonflage (11).

3. Procédé selon la revendication 2, dans lequel au moins une partie de la tige (16) est introduite dans l'ébauche de bouteille (10) déjà afin de nettoyer l'ébauche de bouteille (10).

4. Procédé selon l'une quelconque des revendications précédentes, dans lequel la bouteille (23) est fermée directement après le retrait de la tige (16).

5. Dispositif servant à remplir des bouteilles (23), en particulier des bouteilles en PET, comprenant au moins un moule de purge (11) servant à gonfler des ébauches de bouteille (10), en particulier des préformes, par un capuchon de remplissage (21) et une tête de remplissage (22),
**caractérisé en ce**
**que** le dispositif est mis au point afin de disposer le capuchon de remplissage (21), avant le gonflage, au niveau de l'ébauche de bouteille (10) et la tête de remplissage (22) au niveau du capuchon de remplissage et de nettoyer l'ébauche de bouteille (10) par la tête de remplissage (22) et par le capuchon de remplissage (21).

6. Dispositif selon la revendication 5, dans lequel le dispositif présente un convoyeur (42), en particulier un convoyeur en boucle, servant à recevoir et à convoyer des ébauches de bouteille (10) et des bouteilles (23).

7. Dispositif selon la revendication 5 ou 6, dans lequel le dispositif, en particulier le convoyeur (42), comprend les zones suivantes :
- une zone de réception (42) servant à recevoir les ébauches de bouteille (10) et servant à installer le capuchon de remplissage (21) et la tête de remplissage (22),
- une zone de nettoyage (44) servant à nettoyer, en particulier servant à désinfecter, stériliser et/ou aseptiser, les ébauches de bouteille (10),
- une zone de gonflage (46) servant à gonfler les ébauches de bouteille (10) afin de former une bouteille (23) et
- une zone de remplissage (48) servant à l'embouteillage de la bouteille (23),
- une zone de fermeture (50) servant à fermer les bouteilles (23) remplies en soudant le capuchon de remplissage (21).

8. Dispositif selon la revendication 6 ou 7, dans lequel le convoyeur (42) présente une zone de distribution (52) servant à distribuer les bouteilles (23) fermées remplies.

9. Dispositif selon l'une quelconque des revendications 5 à 8, dans lequel la tige (16) présente au moins un premier canal (17) avec au moins une première ouverture (19) et au moins un deuxième canal (18) avec au moins une deuxième ouverture (20).
